# EUROPÄISCHE PATENTSCHRIFT

(11) **EP 4 484 912 B1**
(45) Veröffentlichungstag und Bekanntmachung des Hinweises auf die Patenterteilung: **05.11.2025**
(21) Anmeldenummer: 24182044.8
(22) Anmeldetag: 13.06.2024
(51) Int. Cl.: G01L 5/16, B25J 13/08, B25J 19/06, G05G 9/047, G01L 5/22, B25J 13/02

(54) **VORRICHTUNG ZUR ERMITTLUNG EINER AUF EINEN KÖRPER WIRKENDEN KRAFT IN WENIGSTENS DREI RAUMRICHTUNGEN**
DEVICE FOR DETERMINING A FORCE ACTING ON A BODY IN AT LEAST THREE SPATIAL DIRECTIONS
DISPOSITIF POUR DÉTERMINER UNE FORCE AGISSANT SUR UN CORPS DANS AU MOINS TROIS DIRECTIONS SPATIALES

(30) Priorität: 26.06.2023 DE 202023103525 U
(43) Veröffentlichungstag der Anmeldung: 01.01.2025
(73) Patentinhaber: Neura Robotics GmbH, 72555 Metzingen (DE)
(72) Erfinder: Ding, Yitao, 72762 Reutlingen (DE); Barrett, Eamon, 72764 Reutlingen (DE)
(74) Vertreter: Westphal, Mussgnug & Partner Patentanwälte mbB

(56) Entgegenhaltungen:
- WO-A1-2007/039785
- JP-A- H06 179 187
- US-A1- 2020 253 677

## Beschreibung

Die Erfindung betrifft eine Vorrichtung zur Ermittlung einer auf einen Körper wirkenden Kraft in wenigstens drei Raumrichtungen sowie einen Körper mit einer solchen Vorrichtung.

Zum Programmieren sowie zum Einrichtbetrieb von Körpern, insbesondere Manipulatoren wie beispielsweise Industrierobotern oder Cobots, ist eine manuelle Bewegung dieser Körper durch Aufbringen einer Kraft auf den Körper selbst oder auf ein entsprechendes Eingabegerät an dem Körper erforderlich. Dabei ist bei vielen Anwendungen die Sensitivität oder Feinfühligkeit des jeweiligen Eingabegeräts zum Ausführen der Bewegung ein limitierender Faktor. Darüber hinaus weisen aktuelle Lösungen bedingt durch das Messprinzip zur Erfassung einer Kraft eine von der Stellung des Körpers abhängige Sensitivität auf.

Da Manipulatoren häufig diverse Freiheitsgrade aufweisen, ist die simultane Ansteuerung all dieser Achsen in interpolierten, kartesischen Bewegungen in allen sechs Freiheitsgraden (X, Y, Z, Ry, Ry, Rz) von großer Bedeutung, um den Programmierprozess schnell und intuitiv zu gestalten.

Bekannt ist derzeit, die Motorströme, welche zur Bewegung einzelner Achsen eines Körpers, insbesondere Manipulators, erforderlich sind, zu messen und die jeweils an den Achsen anliegenden Drehmomente daraus zu berechnen. Durch Subtraktion der benötigten Haltemomente können Änderungen, die durch auf die Achsen aufgebrachte Kräfte entstehen, errechnet und in Folgebewegungen umgewandelt werden. Nachteilig dabei ist jedoch, dass die auf den Körper eingebrachten Kräfte lediglich indirekt gemessen werden. In Abhängigkeit von der Stellung des Körpers, insbesondere Manipulators, können unterschiedlich große Hebelwirkungen entstehen, die die Sensitivität der Lösung inhomogen über den Arbeitsraum verteilen.

Alternativ ist es auch bekannt, die Drehmomente an den jeweiligen Achsen durch in den Achsen verbaute Drehmomentsensoren direkt zu messen und Änderungen des Drehmoments, die durch auf die Achsen aufgebrachte Kräfte entstehen, in Folgebewegungen umzusetzen. Nachteilig bei diesem Verfahren ist jedoch ebenfalls, dass die auf den Körper eingebrachten Kräfte lediglich indirekt gemessen werden und in Abhängigkeit von der Stellung des Körpers, insbesondere Manipulators, unterschiedlich große Hebelwirkungen entstehen können. Darüber hinaus müssen an jeder Achse Drehmomentsensoren angebracht werden, was zu hohen Kosten führen kann.

Dokument JP H06 179187 A (MITSUBISHI HEAVY IND LTD) 28. Juni 1994 (1994-06-28) offenbart einen orientierungserfassenden Lehrmechanismus, der die Intuitivität der Betriebsanweisung durch eine Lehreinheit eines Robotermanipulators verbessern wird.

WO 2007/039785 A1 (ABB AS [NO]; BRAUT KNUT [NO]) 12. April 2007 (2007-04-12)offenbart ein Beispiel für eine Robotersteuerung, die für einen Industrieroboter bestimmt ist.

US 2020/253677 A1 (JINNO MAKOTO [JP]) 13. August 2020 (2020-08-13)offenbart ein Beispiel für ein MANIPULATOR- UND OP-unterstützendes ROBOTERSYSTEM.

Die Aufgabe der Erfindung besteht darin, eine Vorrichtung zur Ermittlung einer auf einen Körper wirkenden Kraft in wenigstens drei Raumrichtungen bereitzustellen, mittels welcher die auf den Körper eingebrachten Kräfte derart erfasst werden können, dass ein Einlern- oder Programmierprozess des Körpers auf einfache Art und Weise ermöglicht wird.

Die Aufgabe der Erfindung wird gelöst durch eine Vorrichtung zur Ermittlung einer auf einen Körper wirkenden Kraft in wenigstens drei Raumrichtungen mit den Merkmalen des Patentanspruchs **1.**

Vorteilhafte Ausgestaltungen und Weiterbildungen der Erfindung sind in den abhängigen Ansprüchen angegeben.

Die erfindungsgemäße Vorrichtung zur Ermittlung einer auf einen Körper, insbesondere einen Manipulator, wirkenden Kraft in wenigstens drei Raumrichtungen weist zwei Betätigungselemente auf, wobei jedes der Betätigungselemente ein Bedienelement mit einer Längsachse aufweist, welches relativ zu einem Basiselement bewegbar, insbesondere kippbar, ist, wobei aus der Relativbewegung zwischen dem Bedienelement und dem Basiselement eine Einzelkraft in wenigstens drei Raumrichtungen ermittelbar ist, und wobei die beiden Betätigungselemente derart relativ zueinander angeordnet sind, dass die beiden Bedienelemente auf voneinander abgewandten Seiten der Basiselemente angeordnet sind, und umfasst ferner eine Auswerte-/Steuereinheit, welche die von jedem Betätigungselement ermittelte Einzelkraft erfasst und welche dazu ausgebildet ist, die auf den Körper wirkende Kraft in wenigstens drei Raumrichtungen aus den beiden Einzelkräften, insbesondere aus der Summe der Einzelkräfte, zu berechnen. Die Betätigung derartiger Betätigungselemente kann intuitiv erfolgen. Dadurch, dass die Bedienelemente auf voneinander abgewandten Seiten der Basiselemente angeordnet sind, können diese von einem Benutzer derart gegriffen werden, dass der Daumen an einem der Bedienelemente und beispielsweise der Zeigefinder an dem anderen der Bedienelemente anliegt. Der Benutzer kann auf diese Weise lediglich durch Anfassen der Vorrichtung diese im Raum bewegen und einen Einlernprozess oder Programmierprozess an dem Körper durchführen.

Die auf den Körper wirkende Kraft kann insbesondere zumindest in den drei linearen Raumrichtungen **X, Y,** Z berechnet werden.

Vorteilhafterweise ist aus der Relativbewegung zwischen dem Bedienelement und dem Basiselement eine Einzelkraft in wenigstens vier Raumrichtungen ermittelbar, insbesondere in den drei linearen Raumrichtungen und in Richtung der Drehung um die Längsachse des Bedienelements, korrespondierend zu dem um die Längsachse des Bedienelements wirkenden Drehmoment, wodurch die Genauigkeit der Bestimmung der auf den Körper wirkenden Kraft erhöht werden kann.

Vorteilhafterweise ist die Auswerte-/Steuereinheit ausgebildet, die auf den Körper wirkende Kraft in sechs Raumrichtungen aus den beiden Einzelkräften, insbesondere aus der Summe der Einzelkräfte, zu berechnen, um die Genauigkeit der Bestimmung der auf den Körper wirkenden Kraft weiter zu erhöhen.

Vorzugsweise sind die beiden Basiselemente in einem Abstand A zueinander angeordnet, was die Bestimmung der auf den Körper wirkenden Kraft in sechs Raumrichtungen, auch wenn die beiden Einzelkräfte in weniger Raumrichtungen bestimmt werden, ermöglichen kann.

Gemäß einer bevorzugten Weiterbildung der Erfindung weist jedes der Betätigungselemente ein Bedienelement mit einer Längsachse auf, welches relativ zu einem Basiselement kippbar ist. Die Kippbewegungen können auf einfache Art und Weise mit hoher Genauigkeit detektiert werden, wobei andererseits die Kippbewegungen für einen Benutzer intuitiv ausführbar sein können, so dass sich insgesamt eine einfache Bedienung ergeben kann.

Vorteilhafterweise sind die Betätigungselemente nach Art eines Joysticks oder Trackpoints ausgebildet, welche eine einfache und intuitive Handhabung ermöglichen können.

Gemäß einer bevorzugten Ausführungsform der Erfindung ist vorgesehen, dass die Auswerte-/Steuereinheit ausgebildet ist, die zwischen den beiden Betätigungselementen wirkende Kraft in wenigstens drei Raumrichtungen anhand der Einzelkräfte, insbesondere aus der Differenz der Einzelkräfte, zu berechnen. Die zusätzliche Bestimmung der zwischen den beiden Betätigungselementen wirkenden Kraft ermöglicht weitere Anwendungen.

Insbesondere kann die Vorrichtung in einer bevorzugten Weiterbildung einen Totmannschalter aufweisen, der in Abhängigkeit von der zwischen den beiden Betätigungselementen wirkenden Kraft schaltet. Beispielsweise kann dazu die zwischen den beiden Betätigungselementen wirkende Kraft mit Sollwerten verglichen werden und bei Über- oder Unterschreitung bestimmte Ereignisse auslösen, beispielsweise eine Bewegung des Körpers unterbinden oder einen Einlernprozess oder Programmierprozess aktivieren.

In einer Vorrichtung können damit sowohl eine Steuerung einer Bewegung des Körpers basierend auf der Bestimmung der auf den Körper wirkenden Kraft als auch gleichzeitig ein Totmannschalter basierend auf der Bestimmung der auf den zwischen den beiden Betätigungselementen wirkenden Kraft realisiert werden, welche beide mit einer einzigen Hand des Benutzers betätigt werden können.

Gemäß einer bevorzugten Ausführungsform der Erfindung ist das Betätigungselement, insbesondere das Bedienelement, mit einem Aktuator, insbesondere einem Vibrationsmotor, gekoppelt. Ein derartiger Aktuator ermöglicht ein haptisches Feedback an den Benutzer, beispielsweise über eine erfolgte Betätigung, über Bewegungsgrenzen des Körpers oder über Kraft- oder Eingabegrenzen, also beispielsweise ein Hinweis, dass der Benutzer zu viel Kraft oder Drehmoment ausübt oder der Körper sich nicht mehr schneller bewegen kann. Dabei besteht grundsätzlich auch die Möglichkeit, unterschiedliche haptische Feedbackmuster vorzusehen, um unterschiedliche Informationen an den Benutzer rückzumelden.

Ein erfindungsgemäßer Körper, insbesondere Manipulator, vorzugsweise Industrieroboter oder Cobot, ist mit einer wie zuvor beschriebenen erfindungsgemäßen Vorrichtung ausgestattet. Als Cobot oder kollaborativer Roboter wird ein Industrieroboter bezeichnet, der mit Menschen gemeinsam arbeitet und im Produktionsprozess nicht durch Schutzeinrichtungen von diesen getrennt ist. Daher sind insbesondere bei Cobots entsprechende Sicherheitsfunktionen vorgesehen, die die Interaktion zwischen Cobot und Benutzer sicher gestalten.

Vorzugsweise sind die beiden Betätigungselemente derart relativ zueinander an der Oberfläche des Körpers angeordnet, dass ihre Längsachsen parallel zueinander angeordnet sind. Dies kann die Auswertung der Einzelkräfte vereinfachen.

Eine vorteilhafte Weiterbildung der Erfindung sieht vor, dass die Vorrichtung lösbar an dem Körper angeordnet ist, insbesondere in Form eines Moduls. Dies ermöglicht auf einfache Art und Weise ein Nachrüsten.

Vorzugsweise sind die beiden Betätigungselemente auf zwei voneinander abgewandten Seiten der Oberfläche des Körpers angeordnet, um ein ergonomisches Greifen durch einen Benutzer ermöglichen zu können.

Ausführungsbeispiele der Erfindung wird anhand der folgenden Figuren ausführlich erläutert. Es zeigen
- Fig. 1: eine perspektivische Ansicht eines Ausführungsbeispiels einer erfindungsgemäßen Vorrichtung zur Ermittlung einer auf einen Körper wirkenden Kraft in wenigstens drei Raumrichtungen,
- Fig. 2: eine Draufsicht auf die Vorrichtung gemäß Figur 1,
- Fig. 3: eine perspektivische Ansicht der Vorrichtung gemäß Figur 1 bei Anordnung an einer Werkzeugaufnahme für einen Roboter,
- Fig. 4: eine Draufsicht auf die Anordnung gemäß Fig. 3,
- Fig. 5: eine perspektivische Ansicht eines Teils eines Roboterarms mit daran angeordneter Vorrichtung gemäß Fig. 1,
- Fig. 6: eine weitere perspektivische Ansicht des Teils des Roboterarms gemäß Fig. 5,
- Fig. 7: eine perspektivische Ansicht eines Teils eines Roboterarms mit integrierter Vorrichtung zur Ermittlung einer auf einen Körper wirkenden Kraft in wenigstens drei Raumrichtungen und
- Fig. 8: eine weitere perspektivische Ansicht des Teils des Roboterarms gemäß Fig. 7.

In sämtlichen Figuren bezeichnen gleiche Bezugszeichen gleiche oder funktionsgleiche Teile, wobei zur besseren Übersicht nicht sämtliche Bezugszeichen in sämtlichen Figuren angegeben sind.

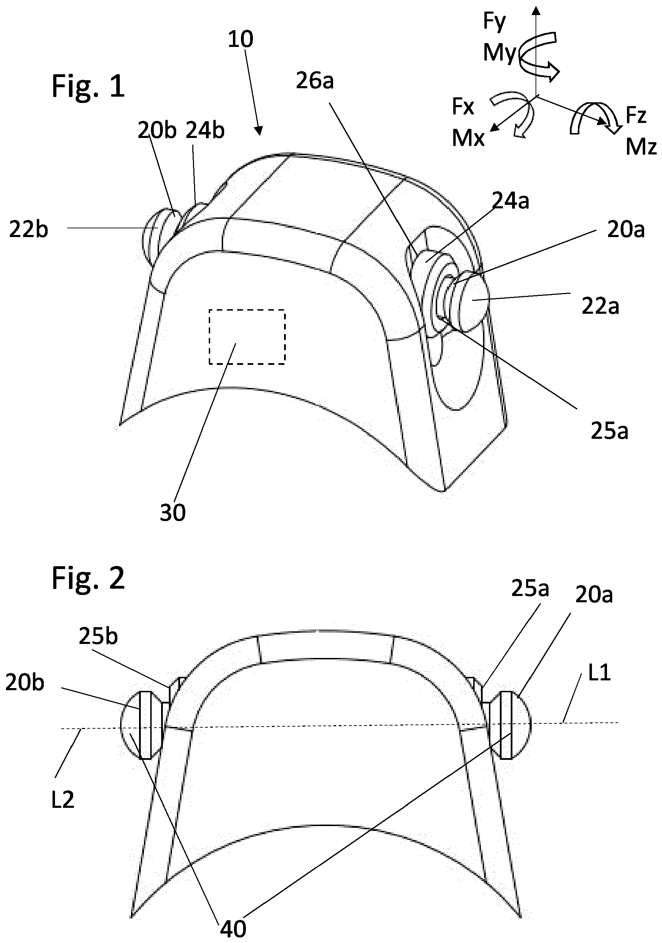

Die Figuren 1 und 2 zeigen ein Ausführungsbeispiel einer Vorrichtung 10 zur Ermittlung einer auf einen Körper wirkenden Kraft in wenigstens drei Raumrichtungen Fx, Fy, Fz, Mx, My, Mz. Bei den Raumrichtungen handelt es sich um die drei linearen Richtungen X, Y, Z sowie die Drehung um diese drei linearen Richtungen. Wird die auf einen Körper wirkenden Kraft in drei Raumrichtungen bestimmt, handelt es sich insbesondere um die drei linearen Richtungen X, Y, Z. Vorzugsweise wird die auf den Körper wirkende Kraft in allen sechs Raumrichtungen Fx, Fy, Fz, Mx, My, Mz, das heißt die linearen Kräfte Fx, Fy, Fz in den drei Richtungen X, Y, und Z, sowie die Drehmomente My, My, Mz um diese drei Achsen, bestimmt.

Die Vorrichtung umfasst zwei Betätigungselemente 20a, 20b, wobei jedes der Betätigungselemente 20a, 20b ein Bedienelement 22a, 22b mit einer Längsachse L1, L2 aufweist, welches relativ zu einem Basiselement 24a, 24b bewegbar, insbesondere kippbar, ist. Beispielsweise kann jedes der Betätigungselemente 20a, 20b nach Art eines Joysticks oder Trackpoints ausgebildet sein. Jedes Basiselement 24a, 24b weist eine erste Seite 25a, 25b und eine im Wesentlichen parallel dazu angeordnete zweite Seite 26a auf, wobei die zweite Seite des zweiten Basiselements 20b in den Figuren verdeckt ist. Das Bedienelement 22a, 22b ist insbesondere auf der ersten Seite 25a, 25b angeordnet. Die beiden Betätigungselemente 20a, 20b sind insbesondere baugleich ausgebildet.

Erfindungsgemäß sind die beiden Betätigungselemente 20a, 20b derart relativ zueinander angeordnet, dass die beiden Bedienelemente 24a, 24b auf voneinander abgewandten Seiten 25a, 25b der Basiselemente 24a, 24b angeordnet sind. Die beiden anderen Seiten 26a der Basiselemente 24a, 24b sind insbesondere einander zugewandt angeordnet. Die beiden Betätigungselemente 20a, 20b sind insbesondere in einem Abstand A zueinander angeordnet.

Die Betätigungselemente 20a, 20b sind insbesondere derart relativ zueinander angeordnet, dass die Längsachsen L1, L2 der beiden Bedienelemente 24a, 24b parallel zueinander angeordnet sind und insbesondere zusammenfallen (vgl. Fig. 2).

Das Betätigungselement 20a, 20b, insbesondere das Bedienelement 24a, 24b, kann mit einem Aktuator (nicht dargestellt), insbesondere einem Vibrationsmotor, gekoppelt sein, um ein haptisches Feedback auf das Bedienelement 24a, 24b bei Betätigung durch einen Benutzer geben zu können.

Für jedes der Betätigungselemente 20a, 20b ist aus der Relativbewegung zwischen dem Bedienelement 22a, 22b und dem Basiselement 24a, 24n eine Einzelkraft F1, F2 in wenigstens drei Raumrichtungen, insbesondere zumindest in den drei linearen Raumrichtungen X, Y, Z, vorzugsweise zusätzlich in Richtung der Drehung Mz um die Längsachse L1, L2 des Bedienelements 24a, 24b, ermittelbar.

Die Vorrichtung 10 umfasst weiterhin eine Auswerte-/Steuereinheit 30, welche die von jedem Betätigungselement 20a, 20b ermittelte Einzelkraft F1, F2 erfasst und welche dazu ausgebildet ist, die auf den Körper wirkende Kraft in wenigstens drei Raumrichtungen, dabei insbesondere den drei linearen Raumrichtungen Fx, Fy, Fz, vorzugsweise jedoch in allen sechs Raumrichtungen Fx, Fy, Fz, Mx, My, Mz, aus den beiden Einzelkräften F1, F2, zu berechnen. Die Berechnung kann beispielsweise aus der Summe der Einzelkräfte F1, F2, insbesondere unter Berücksichtigung des Abstands A der beiden Betätigungselemente 20a, 20b, erfolgen. Auch wenn jedes einzelnen Betätigungselement 20a, 20b eine Einzelkraft F1, F2 in weniger als sechs Raumrichtungen ermittelt, kann aufgrund der Tatsache, dass zwei Betätigungselemente 20a, 20b verwendet werden und diese beabstandet zueinander angeordnet sind, insgesamt eine Berechnung der auf den Körper wirkenden Kraft F auch in allen sechs Raumrichtungen Fx, Fy, Fz, Mx, My, Mz erfolgen.

Die Auswerte-/Steuereinheit kann weiterhin ausgebildet sein, die zwischen den beiden Betätigungselementen 20a, 20b wirkende Kraft in wenigstens drei Raumrichtungen, vorzugsweise in allen sechs Raumrichtungen Fx, Fy, Fz, Mx, My, M,) anhand der Einzelkräfte F1, F2, insbesondere aus der Differenz der Einzelkräfte F1, F2, dabei ebenfalls insbesondere unter Berücksichtigung des Abstands A der Betätigungselemente 20a, 20b, zu berechnen. Die zwischen den beiden Betätigungselementen 20a, 20b wirkende Kraft kann dabei beispielsweise zur Schaltung eines Totmannschalters 40 verwendet werden. Der Totmannschalter 40 kann dabei beispielsweise dazu verwendet werden zu detektieren, ob ein Benutzer die Betätigungselemente 20a, 20b berührt, und nur in diesem Fall einen Einlernprozess oder einen Programmierprozess aktivieren. Bei zu geringem oder zu hohem Druck kann der Totmannschalter 40 eine Bewegung des Körpers anhalten oder unterbinden.

Die Betätigungselemente 20a, 20b und die Auswerte-/Steuereinheit 30 können in einem Gehäuse 50 angeordnet sein, welches lösbar an einem Körper anordenbar ist. Die Bedienelemente 22a, 22b sind dabei von außerhalb des Gehäuses 50 zugänglich, um eine Bedienung zu ermöglichen. Die Bedienelemente 22a, 22b sind dabei insbesondere auf zwei voneinander abgewandten Seiten 51, 52 der Oberfläche des Gehäuses 50 angeordnet. Das Gehäuse 50 kann mittels einer Befestigungsvorrichtung wie beispielsweise Schrauben, Magnete, Rastverbindungen oder ähnlichem befestigt werden.

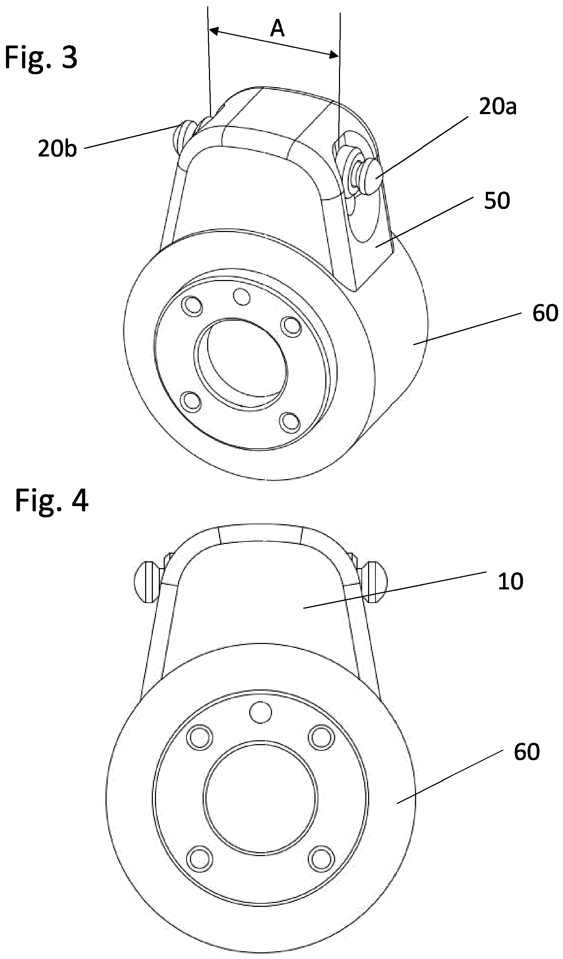

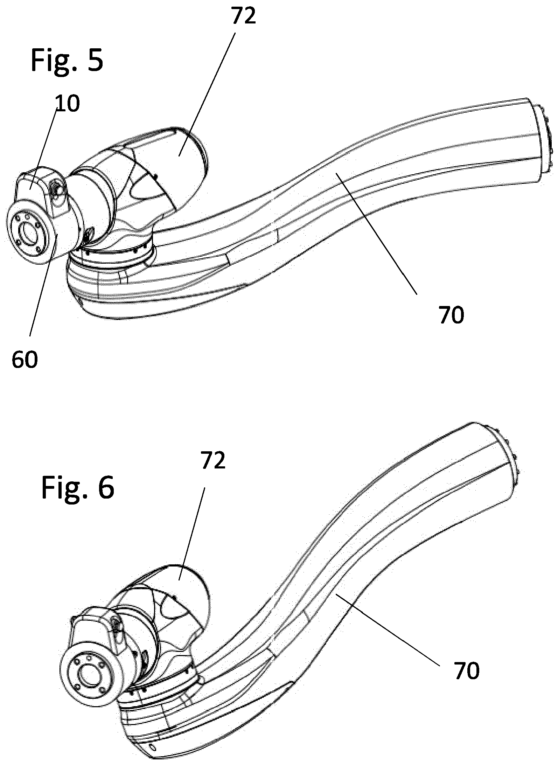

Die Figuren 3 und 4 zeigen eine Anordnung der Vorrichtung 10 an einer Werkzeugaufnahme 60, welches beispielsweise, wie in den Figuren 5 und 6 dargestellt, an einem Roboterkopf 72 eines Roboterarms 70 angeordnet sein kann. Bei dem Roboterarm 70 kann es sich um einen Roboterarm 70 eines Industrieroboters oder eines kollaborativen Roboters, eines sogenannten Cobots, handeln.

Mit einer derartigen Vorrichtung 10 wird es einem Benutzer ermöglicht, eine Bewegung des Roboterarms 70 auf einfache Art und Weise durch Greifen im Bereich des freien Endes des Roboterarms 70, insbesondere am Roboterkopf 72, dort insbesondere an der Werkzeugaufnahme 60, und Führen des Roboterarms 70 in die gewünschten Richtungen, einzulernen, da die Vorrichtung 10 die durch den Benutzer aufgebrachte und auf den Roboterarm 70 wirkende Kraft bestimmt und nach dem Einlernprozess in Steuersignale umsetzen kann, um die Bewegung automatisiert nachfahren zu können.

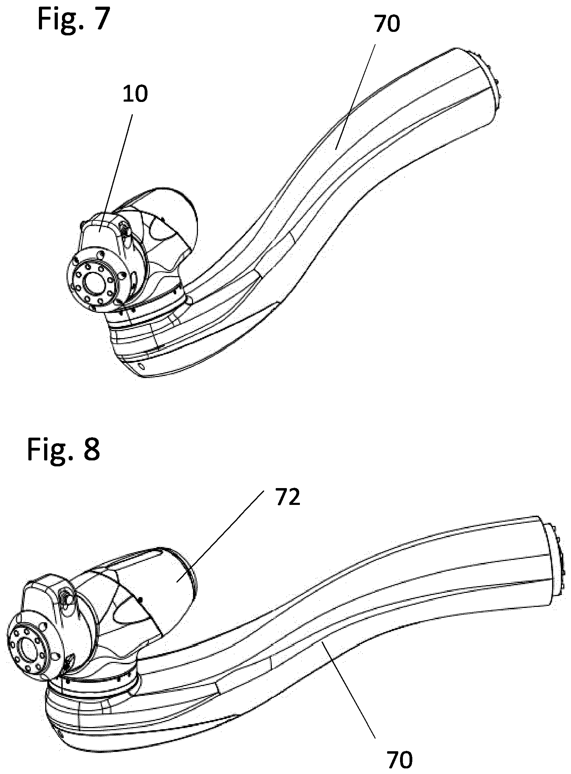

Die in den Figuren 7 und 8 dargestellte Ausführungsform unterscheidet sich von der zuvor beschriebenen Ausführungsform lediglich dadurch, dass die Vorrichtung 10 nicht lösbar an der Werkzeugaufnahme 60 angeordnet ist, sondern in die Werkzeugaufnahme 60 integriert ist, also in demselben Gehäuse angeordnet ist. Es wäre alternativ auch möglich, die Vorrichtung 10 in den Roboterkopf 72 oder auch an sonstiger Stelle des Roboterarms 70 zu integrieren, wobei eine Anordnung der Vorrichtung 10 in möglichst großer Entfernung zu Dreh- oder Schwenkachsen des Roboterarms 70 bevorzugt ist, um die zur Bewegung des Roboterarms 70 erforderlichen Kräfte aufgrund des längeren Hebels gering halten zu können.

### Bezugszeichenliste

- 10: Vorrichtung
- 20a: Betätigungselement
- 20b: Betätigungselement
- 22a: Bedienelement
- 22b: Bedienelement
- 24a: Basiselement
- 24b: Basiselement
- 25a: Seite
- 25b: Seite
- 26a: Seite
- 30: Auswerte./Steuereinheit
- 40: Totmannschalter
- 50: Gehäuse
- 60: Werkzeugaufnahme
- 70: Roboterarm
- 72: Roboterkopf
- A: Abstand
- L1: Längsachse
- L2: Längsachse

## Patentansprüche

1. Vorrichtung (10) zur Ermittlung einer auf einen Körper, insbesondere einen Manipulator, wirkenden Kraft in wenigstens drei Raumrichtungen (Fx, Fy, Fz, Mx, My, Mz) mit
- zwei Betätigungselementen (20a, 20b), wobei jedes der Betätigungselemente (20a, 20b) ein Bedienelement (22a, 22b) mit einer Längsachse (L1, L2) aufweist, welches relativ zu einem Basiselement (24a, 24b) bewegbar, insbesondere kippbar, ist, wobei aus der Relativbewegung zwischen dem Bedienelement (22a, 22b) und dem Basiselement (24a, 24b) eine Einzelkraft (F1, F2) in wenigstens drei Raumrichtungen ermittelbar ist, und wobei die beiden Betätigungselemente (20a, 20b) derart relativ zueinander angeordnet sind, dass die beiden Bedienelemente (22a, 22b) auf voneinander abgewandten Seiten (25a, 25b) der Basiselemente (24a, 24b) angeordnet sind,
- und einer Auswerte-/Steuereinheit (30), welche die von jedem Betätigungselement (20a, 20b) ermittelte Einzelkraft (F1, F2) erfasst und welche dazu ausgebildet ist, die auf den Körper wirkende Kraft in wenigstens drei Raumrichtungen (Fx, Fy, Fz, Mx, My, Mz) aus den beiden Einzelkräften (F1, F2), insbesondere aus der Summe der Einzelkräfte, zu berechnen.

2. Vorrichtung nach Anspruch 1,
**dadurch gekennzeichnet, dass** aus der Relativbewegung zwischen dem Bedienelement (22a, 22b) und dem Basiselement (24a, 24b) eine Einzelkraft (F1, F2) in wenigstens vier Raumrichtungen (Fx, Fy, Fz, Mx, My, Mz) ermittelbar ist, insbesondere in den drei linearen Raumrichtungen und in Richtung der Drehung um die Längsachse (L1, L2) des Bedienelements (22a, 22b).

3. Vorrichtung nach einem der vorhergehenden Ansprüche,
**dadurch gekennzeichnet, dass** die Auswerte-/Steuereinheit (30) ausgebildet ist, die auf den Körper wirkende Kraft in sechs Raumrichtungen (Fx, Fy, Fz, Mx, My, Mz) aus den beiden Einzelkräften (F1, F2), insbesondere aus der Summe der Einzelkräfte, zu berechnen.

4. Vorrichtung nach einem der vorhergehenden Ansprüche,
**dadurch gekennzeichnet, dass** die beiden Basiselemente (24a, 24b) in einem Abstand (A) zueinander angeordnet sind.

5. Vorrichtung nach einem der vorhergehenden Ansprüche,
**dadurch gekennzeichnet, dass** die Betätigungselemente (20a, 20b) nach Art eines Joysticks oder Trackpoints ausgebildet sind.

6. Vorrichtung nach einem der vorhergehenden Ansprüche,
**dadurch gekennzeichnet, dass** die Auswerte-/Steuereinheit (30) ausgebildet ist, die zwischen den beiden Betätigungselementen (20a, 20b) wirkende Kraft in wenigstens drei Raumrichtungen (Fx, Fy, Fz, Mx, My, Mz) anhand der Einzelkräfte (F1, F2), insbesondere aus der Differenz der Einzelkräfte, zu berechnen.

7. Vorrichtung nach einem der vorhergehenden Ansprüche,
**dadurch gekennzeichnet, dass** die Vorrichtung (10) einen Totmannschalter (40) aufweist, der in Abhängigkeit von der zwischen den beiden Betätigungselementen (20a, 20b) wirkenden Kraft schaltet.

8. Vorrichtung nach einem der vorhergehenden Ansprüche,
**dadurch gekennzeichnet, dass** das Betätigungselement (20a, 20b), insbesondere das Bedienelement (22a, 22b), mit einem Aktuator, insbesondere einem Vibrationsmotor, gekoppelt ist.

9. Körper, insbesondere Manipulator, vorzugsweise Industrieroboter oder Cobot, mit einer Vorrichtung (10) nach einem der vorhergehenden Ansprüche.

10. Körper nach Anspruch 9,
**dadurch gekennzeichnet, dass** die beiden Betätigungselemente (20a, 20b) derart relativ zueinander an der Oberfläche des Körpers angeordnet sind, dass ihre Längsachsen (L1, L2) parallel zueinander angeordnet sind.

11. Körper nach Anspruch 9 oder 10,
**dadurch gekennzeichnet, dass** die Vorrichtung (10) lösbar an dem Körper angeordnet ist.

12. Körper nach einem der Ansprüche 9 bis 11,
**dadurch gekennzeichnet, dass** die beiden Betätigungselemente (20a, 20b) auf zwei voneinander abgewandten Seiten der Oberfläche des Körpers angeordnet sind.

## Claims

1. Device (10) for determining a force acting on a body, in particular a manipulator, in at least three spatial directions (Fx, Fy, Fz, Mx, My, Mz), comprising
- two actuation elements (20a, 20b), wherein each of the actuation elements (20a, 20b) comprises an operating element (22a, 22b) having a longitudinal axis (L1, L2), which is movable, in particular tiltable, relative to a base element (24a, 24b), wherein a single force (F1, F2) in at least three spatial directions can be determined from the relative movement between the operating element (22a, 22b) and the base element (24a, 24b), and wherein the two actuation elements (20a, 20b) are arranged relative to one another in such a way that the two operating elements (22a, 22b) are arranged on sides (25a, 25b) of the base element (24a, 24b) facing away from one another,
- and an evaluation/control unit (30) which acquires the single force (F1, F2) determined from each actuation element (20a, 20b) and which is configured for calculating the force acting on the body in at least three spatial directions (Fx, Fy, Fz, Mx, My, Mz) from the two single forces (F1, F2), in particular from the sum of the single forces.

2. Device according to claim 1,
**characterised in that** a single force (F1, F2) in at least four spatial directions (Fx, Fy, Fz, Mx, My, Mz), in particular in the three linear spatial directions and in the direction of the rotation about the longitudinal axis (L1, L2) of the operating element (22a, 22b), can be determined from the relative movement between the operating element (22a, 22b) and the base element (24a, 24b).

3. Device according to either of the preceding claims,
**characterised in that** the evaluation/control unit (30) is configured to calculate the force acting on the body in six spatial directions (Fx, Fy, Fz, Mx, My, Mz) from the two single forces (F1, F1), in particular from the sum of the single forces.

4. Device according to any of the preceding claims,
**characterised in that** the two base elements (24a, 24b) are arranged at a spacing (A) from one another.

5. Device according to any of the preceding claims,
**characterised in that** the actuation elements (20a, 20b) are configured in the manner of a joystick or trackpoint.

6. Device according to any of the preceding claims,
**characterised in that** the evaluation/control unit (30) is configured to calculate the force acting between the two actuation elements (20a, 20b) in at least three spatial directions (Fx, Fy, Fz, Mx, My, Mz) on the basis of the single forces (F1, F2), in particular from the difference of the single forces.

7. Device according to any of the preceding claims,
**characterised in that** the device (10) comprises a dead man's switch (40) which switches depending on the force acting between the two actuation elements (20a, 20b).

8. Device according to any of the preceding claims,
**characterised in that** the actuation element (20a, 20b), in particular the operating element (22a, 22b), is coupled to an actuator, in particular a vibrating motor.

9. Body, in particular manipulator, preferably industrial robot or cobot, comprising a device (10) according to any of the preceding claims.

10. Body according to claim 9,
**characterised in that** the two actuation elements (20a, 20b) are arranged relative to one another, on the surface of the body, in such a way that their longitudinal axes (L1, L2) are arranged in parallel with one another.

11. Body according to either claim 9 or claim 10,
**characterised in that** the device (10) is releasably arranged on the body.

12. Body according to any of claims 9 to 11,
**characterised in that** the two actuation elements (20a, 20b) are arranged on two sides of the surface of the body facing away from one another.

## Revendications

1. Dispositif (10) de détermination d'une force s'appliquant dans au moins trois directions (Fx, Fy, Fz, Mx, My, Mz) de l'espace à un corps, en particulier à un manipulateur, comprenant :
- deux éléments (20a, 20b) d'actionnement, dans lequel chacun des éléments (20a, 20b) d'actionnement a un élément (22a, 22b) de commande ayant un axe (L1, L2) longitudinal, qui est mobile par rapport à un élément (24a, 24b) de base, en pouvant, en particulier, basculer, dans lequel à partir du mouvement relatif entre l'élément (22a, 22b) de commande et l'élément (24a, 24b) de base, une force (F1, F2) individuelle peut être déterminée dans au moins trois directions de l'espace et dans lequel les deux éléments (20a, 20b) d'actionnement sont montés l'un par rapport à l'autre de manière à ce que les deux éléments (22a, 22b) de commande soient disposés sur des côtés (25a, 25b) non tournés l'un vers l'autre des éléments (24a, 24b) de base,
- et une unité (30) d'évaluation/commande, qui détecte la force (F1, F2) individuelle, déterminée par chaque élément (20a, 20b) d'actionnement, et qui est constituée de manière à calculer la force s'appliquant, dans au moins trois directions (Fx, Fy, Fz, Mx, My, Mz) de l'espace, au corps, à partir des deux forces (F1, F2) individuelles, en particulier à partir de la somme des forces individuelles.

2. Dispositif suivant la revendication 1,
**caractérisé en ce qu'**à partir du mouvement relatif entre l'élément (22a, 22b) de commande et l'élément (24a, 24b) de base, une force (F1, F2) individuelle dans au moins quatre directions (Fx, Fy, Fz, Mx, My, Mz) de l'espace peut être déterminée, en particulier dans les trois directions linéaires de l'espace et dans la direction de la rotation autour de l'axe (L1, L2) longitudinal de l'élément (22a, 22b) de commande.

3. Dispositif suivant l'une des revendications précédentes,
**caractérisé en ce que** l'unité (30) d'évaluation/commande est constituée pour calculer la force s'appliquant au corps, dans six directions (Fx, Fy, Fz, Mx, My, Mz) de l'espace, à partir des deux forces (F1, F2) individuelles, en particulier à partir de la somme des forces individuelles.

4. Dispositif suivant l'une des revendications précédentes,
**caractérisé en ce que** les deux éléments (24a, 24b) de base sont disposés à une distance (A) l'un de l'autre.

5. Dispositif suivant l'une des revendications précédentes,
**caractérisé en ce que** les éléments (20a, 20b) d'actionnement sont constitués à la manière d'un joystick ou d'un trackpoint.

6. Dispositif suivant l'une des revendications précédentes,
**caractérisé en ce que** l'unité (30) d'évaluation/commande est constituée pour calculer la force s'appliquant dans au moins trois directions (Fx, Fy, Fz, Mx, My, Mz) de l'espace, entre les deux éléments (20a, 20b) d'actionnement à l'aide des forces (F1, F2) individuelles, en particulier à partir de la différence entre les forces individuelles.

7. Dispositif suivant l'une des revendications précédentes,
**caractérisé en ce que** le dispositif (10) a un interrupteur (40) de veille automatique, qui se met en circuit en fonction de la force s'appliquant entre les deux éléments (20a, 20b) d'actionnement.

8. Dispositif suivant l'une des revendications précédentes,
**caractérisé en ce que** l'élément (20a, 20b) d'actionnement, en particulier l'élément (22a, 22b) d'actionnement, est accouplé à un actionneur, en particulier un moteur à vibration.

9. Corps, en particulier manipulateur, de préférence robot industriel ou cobot, ayant un dispositif (10) suivant l'une des revendications précédentes.

10. Corps suivant la revendication 9,
**caractérisé en ce que** les deux éléments (20a, 20b) d'actionnement sont montés relativement l'un à l'autre à la surface du corps de manière à ce que leurs axes (L1, L2) longitudinaux soient parallèles entre eux.

11. Corps suivant la revendication 9 ou 10,
**caractérisé en ce que** le dispositif (10) est monté de manière amovible sur le corps.

12. Corps suivant l'une des revendications 9 à 11,
**caractérisé en ce que** les deux éléments (20a, 20b) d'actionnement sont disposés sur deux faces non tournées l'une vers l'autre de la surface du corps.
